# FASCICULE DE BREVET EUROPEEN

(11) **EP 0 481 842 B1**
(45) Date de publication et mention de la délivrance du brevet: **14.12.1994**
(21) Numéro de dépôt: 91402664.6
(22) Date de dépôt: 07.10.1991
(51) Int. Cl.: B60S 1/48, F28F 9/00, F28D 7/02

(54) **Dispositif de chauffage d'un liquide de lave-glace, notamment pour véhicule automobile**
Heizvorrichtung für eine Flüssigkeit einer Scheibenwaschanlage in Kraftfahrzeugen
Heater for the liquid of a window washing arrangement for motor vehicles

(30) Priorité: 12.10.1990 FR 9012600
(43) Date de publication de la demande: 22.04.1992
(73) Titulaire: VALEO SYSTEMES D'ESSUYAGE, 78180 Montigny-Le-Bretonneux (FR)
(72) Inventeur: Muller, Guy, F-91570 Bievres (FR); Roumegoux, Jean-Louis, F-75016 Paris (FR); Soreau, Marc, F-75014 Paris (FR)
(74) Mandataire: Gamonal, Didier

(56) Documents cités:
- EP-A- 0 271 821
- FR-A- 2 129 629
- US-A- 4 231 421
- US-A- 4 349 950
- US-A- 4 386 456
- US-A- 4 719 969

## Description

La présente invention se rapporte à un dispositif de chauffage d'un liquide de lave-glace, notamment pour véhicule automobile.

On a déjà proposé de chauffer un liquide de lave-glace dans le but d'améliorer l'efficacité de nettoyage de ce liquide car, il a été constaté que l'élimination des salissures sur une surface vitrée, en particulier un pare-brise de véhicule automobile en est grandement améliorée.

Il est connu par le document FR-A-2 129 629, de prévoir un dispositif de chauffage qui est interposé entre le réservoir du liquide de lave-glace et le/les gicleurs dudit liquide et plus particulièrement ce dispositif est inséré dans une conduite véhiculant un fluide chaud tel que le fluide de refroidissement d'un moteur thermique de véhicule automobile.

Ce dispositif comprend une enceinte creuse à l'intérieur de laquelle circule le fluide chaud et dans laquelle est logé un tube enroulé en spirale en formant une multiplicité de spires, dit serpentin, à l'intérieur duquel circule le liquide de lave-glace à chauffer, ce serpentin étant balayé par le fluide chaud et présentant une tubulure d'entrée et une tubulure de sortie dudit liquide traversant la paroi de l'enceinte creuse.

Pour raison de bonne transmission de la chaleur entre le fluide chaud circulant dans l'enceinte et le liquide de lave-glace circulant dans le serpentin il est nécessaire que la totalité de la surface extérieure des spires du serpentin soit balayée par le fluide chaud.

Pour cela, il est prévu de disposer les spires du serpentin à distance de la paroi interne de l'enceinte creuse et de disposer également les spires à distance les unes des autres de façon à ce qu'elles ne soient plus jointives les unes avec les autres et avec la paroi interne de l'enceinte creuse de façon à permettre au fluide chaud de balayer la totalité de la surface annulaire formée par chaque spire.

Cependant, la Demanderesse a constaté que cette disposition présentait quelques inconvénients.

En effet, le serpentin est suspendu dans l'enceinte creuse par ces deux tubulures ancrées dans la paroi de ladite enceinte, et sous l'effet des variations du courant du fluide chaud circulant dans ladite enceinte, le serpentin est soumis à une flexion continuelle autour du point d'ancrage de ces tubulures.

Cette flexion peut entraîner à l'usage, d'une part, une fissure voire même une rupture au niveau de la traversée des tubulures dans la paroi de l'enceinte creuse, fissure ou rupture qui peut entraîner une pénétration du liquide de lave-glace dans le circuit de refroidissement du moteur, cette pénétration pouvant, à terme, entraîner un vidage complet du liquide contenu dans un bocal de lave-glace, et, d'autre part, des bruits de chocs des spires du serpentin contre la paroi de l'enceinte creuse.

En outre, il peut arriver que, toujours sous l'effet des variations de circulation du courant du fluide chaud, les spires puissent venir en contact l'une avec l'autre, contact qui, lors d'un usage prolongé, peut entraîner une érosion de la paroi du tube formant la spire et son percement ce qui peut occasionner également une pénétration du liquide de lave-glace dans le circuit de refroidissement du moteur.

Il a été décrit dans le document US-A-4 386 456 un échangeur de chaleur constitué d'un faisceau de tubes rectilignes dans lequel certains tubes sont pourvus de bagues d'espacement permettant de maintenir un écartement constant avec les tubes voisins.

Cette disposition présente néanmoins quelques inconvénients dans le sens que les régions des tubes longitudinaux non pourvues de bagues peuvent venir en contact avec les tubes voisins.

La présente invention se propose de rémédier aux inconvénients mentionnés ci-dessus en proposant un dispositif de chauffage d'un liquide de lave-glace de conception simple tout en ayant une performance d'échange de chaleur la plus grande possible.

Selon l'invention, un dispositif de chauffage d'un liquide de lave-glace, notamment pour véhicule automobile, comprenant une enceinte dans laquelle circule un fluide chaud et contenant un tube enroulé en spirale, dit serpentin, tube à l'intérieur duquel circule un liquide de lave-glace à chauffer et des moyens d'entretoisement interposés entre le serpentin et l'enceinte, (Dispositif du type divulgué, par example, dans FR-A-2 129 629, est caractérisé en ce que les moyens d'entretoisement consistent en au moins une barrette s'étendant au moins en partie le long du serpentin et suivant l'axe longitudinal du serpentin.

Grâce à l'invention, le serpentin est maintenu, de manière fixe, dans sa configuration et à l'intérieur de l'enceinte tout en pouvant résister à toute variation du courant de fluide chaud circulant dans l'enceinte creuse.

Selon un mode de réalisation de l'invention, les moyens d'entretoisement interviennent entre chaque spire du serpentin.

Grâce à cette autre caractéristique les spires sont maintenues en position les unes par rapport aux autres et ne peuvent pas venir en contact les unes avec les autres.

Divers modes de réalisation sont indiqués dans les revendications dépendantes.

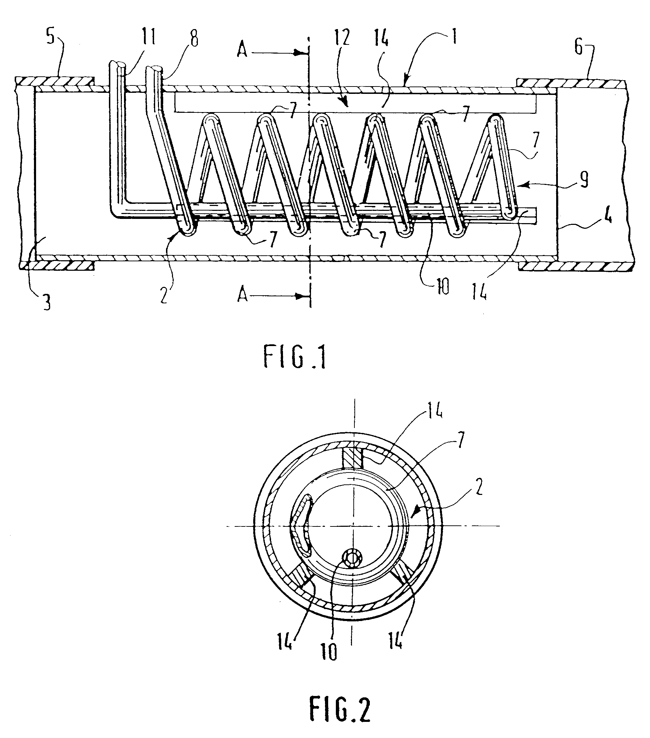

Les autres avantages et caractéristiques de l'invention vont maintenant apparaître à la lecture de la description qui va suivre en se référant aux dessins annexés sur lesquels :
- la figure 1 montre une vue en coupe longitudinale schématique du dispositif de chauffage de lave-glace selon l'invention ;
- la figure 2 est une vue en coupe selon la ligne AA de la figure 1 ;
En se référant à la figure 1, il est montré un dispositif de chauffage de liquide de lave-glace inséré dans une canalisation servant à véhiculer un fluide chaud, telle qu'une canalisation de circulation du liquide de refroidissement d'un moteur thermique de véhicule automobile ou une canalisation montée en sortie d'un radiateur de chauffage.

Le dispositif de chauffage comprend une enceinte 1 à l'intérieur de laquelle est logé un serpentin 2.

L'enceinte 1 de forme tubulaire, ouverte à ses extrémités 3, 4 communique par son extrémité 3 avec une portion de tuyau 5 et par son extrémité ouverte 4 avec une portion d'extrémité de tuyau 6, ces portions d'extrémités de tuyaux faisant partie d'une canalisation générale véhiculant un fluide chaud tel qu'un fluide de refroidissement de moteur thermique.

Dans la suite de la description il ne sera fait mention que d'une enceinte tubulaire de direction rectiligne mais toutes autres formes peuvent être imaginées sans pour cela sortir du cadre de l'invention telles qu'une forme incurvée du genre en L ou en T.

A l'intérieur du volume creux de l'enceinte 1 est logé le serpentin 2 formé à partir d'un tube cylindrique enroulé en spirale de manière à former une multiplicité de spires 7 non jointives.

Comme mieux visible sur la figure 1, le serpentin 2 présente une première extrémité 8 ancrée dans la paroi de l'enceinte 1 en traversant celle-ci et se poursuit à sa partie terminale 9 par un tube de retour 10 traversant l'intérieur du serpentin ainsi formé de manière à présenter une deuxième extrémité 11 également ancrée dans la paroi de l'enceinte creuse en débouchant au-delà de celle-ci.

De manière connue en soi, les extrémités 8 et 11 servent de tubulures d'admission et/ou d'évacuation du liquide de lave-glace apte à circuler dans le serpentin ainsi formé.

Comme déjà évoqué, le serpentin ainsi logé dans l'enceinte est en porte-à-faux par rapport à ses points d'ancrage formés par les extrémités 8 et 11.

Pour éviter ce porte-à-faux, il est prévu des moyens d'entretoisement 12.

Les moyens d'entretoisement 12 sont constitués par au moins une barrette longitudinale 14 ici trois disposées axialement dans l'axe longitudinal du serpentin 2 et en étant de dimensions longitudinales telles qu'elles s'étendent en totalité ou en partie le long du serpentin 2.

En se référant à la figure 2, les barrettes longitudinales 14 sont circulairement régulièrement réparties le long de la paroi circonférentielle de l'enceinte 1 et dans l'exemple représenté à 120° l'une de l'autre mais il peut être envisagé une autre disposition.

Ainsi, le serpentin 2 est convenablement centré par les barrettes 14 dans l'enceinte 1 et tout contact des spires 7 avec la paroi interne de l'enceinte 1 est évité.

De manière préférentielle, les barrettes 14 sont liées fixement avec chaque spire 7 de manière d'une part, à former un moyen d'entretoisement avec l'enceinte 1 et de plus, un moyen d'entretoisement de chaque spire l'une par rapport à l'autre.

Bien entendu, et cela sans sortir du cadre de l'invention, le tube de retour 10 peut également servir de moyen d'entretoisement des spires l'une par rapport à l'autre en étant fixé rigidement avec celles-ci.

La présente invention n'est pas limitée aux exemples de réalisation mais englobe toutes variantes.

Notamment, les tubulures d'arrivée et de sortie 8, 11 peuvent ne pas être situées l'une à côté de l'autre et à une seule extrémité du serpentin mais une tubulure peut être disposée à chaque extrémité du serpentin et les moyens d'entretoisement 12 sont prévus entre ces tubulures.

De même, il peut également être envisagé que le tube de retour 10 soit disposé à l'extérieur des spires 7 en étant relié de manière fixe à chaque spire.

Dans le dispositif de chauffage jusqu'à maintenant décrit le liquide de lave-glace conforme à l'invention peut être utilisé pour le lavage d'une surface vitrée telle que le pare-brise d'un véhicule automobile et le cas échéant de la lunette arrière et/ou des phares d'un véhicule.

## Revendications

1. Dispositif de chauffage d'un liquide de lave-glace, notamment pour véhicule automobile, comprenant une enceinte (1) dans laquelle circule un fluide chaud et contenant un tube enroulé en spirale, dit serpentin (2), tube à l'intérieur duquel circule un liquide de lave-glace à chauffer et des moyens d'entretoisement (12) interposés entre le serpentin (2) et l'enceinte (1), caractérisé en ce que les moyens d'entretoisement (12) consistent en au moins une barrette (14) s'étendant au moins en partie le long du serpentin (2) et suivant l'axe longitudinal du serpentin (2).

2. Dispositif selon la revendication 1, caractérisé en ce que les moyens d'entretoisement (12) interviennent entre chaque spire (7) du serpentin (2).

3. Dispositif selon les revendications 1 ou 2, caractérisé en ce qu'il est prévu trois barrettes longitudinales (14) régulièrement réparties à 120°.

4. Dispositif selon l'une des revendications 1 à 3, caractérisé en ce que les barrettes longitudinales sont utilisées en tant que moyens d'entretoisement des spires (7) du serpentin (2) en étant reliés fixement à celles-ci.

5. Dispositif selon l'une des revendications 1 à 4, caractérisé en ce que les barrettes longitudinales (14) s'étendent en totalité ou en partie le long du serpentin (2).

## Claims

1. Apparatus for heating a screen washing liquid, in particular for a motor vehicle, comprising a chamber (1) in which a hot fluid flows and containing a helically wound tube referred to as a coil (2), within which there flows a screen washing liquid to be heated, together with spacer means (12) interposed between the coil (2) and the chamber (1), characterised in that the spacer means (12) consist of at least one bar (14) extending at least partly along the coil (2), and following the longitudinal axis of the coil (2).

2. Apparatus according to Claim 1, characterised in that the spacer means (12) are arranged between each turn (7) of the coil (2).

3. Apparatus according to Claim 1 or Claim 2, characterised in that three longitudinal bars (14), spaced apart regularly at 120°, are provided.

4. Apparatus according to one of Claims 1 to 3, characterised in that the longitudinal bars are also used as spacer means between the turns (7) of the coil (2), being secured to these latter.

5. Apparatus according to one of Claims 1 to 4, characterised in that the longitudinal bars (14) extend wholly or partly along the coil (2).

## Patentansprüche

1. Heizvorrichtung für eine Flüssigkeit einer Scheibenwaschanlage, bestehend aus einem Gehäuse (1), in dem ein heißes Fluid umläuft und das ein als Rohrschlange bezeichnetes spiralförmig gewickeltes Rohr (2) enthält, in dessen Innern eine zu beheizende Scheibenwaschflüssigkeit zirkuliert, sowie zwischen der Rohrschlange (2) und dem Gehäuse (1) angeordnete Verstrebungsmittel (12), **dadurch gekennzeichnet,** daß die Verstrebungsmittel (12) aus mindestens einem Stab (14) bestehen, der sich zumindest teilweise entlang der Rohrschlange (2) erstreckt und in der Längsachse der Rohrschlange (2) verläuft.

2. Vorrichtung nach Anspruch 1, **dadurch gekennzeichnet,** daß die Verstrebungsmittel (12) zwischen jeder Windung (7) der Rohrschlange (2) eingesetzt werden.

3. Vorrichtung nach einem der Ansprüche 1 oder 2, **dadurch gekennzeichnet,** daß drei Längsstäbe (14) vorgesehen sind, die gleichmäßig in einem Winkel von 120° verteilt sind.

4. Vorrichtung nach einem der Ansprüche 1 bis 3, **dadurch gekennzeichnet,** daß die Längsstäbe als Verstrebungsmittel der Windungen (7) der Rohrschlange (2) verwendet werden und fest mit diesen verbunden sind.

5. Vorrichtung nach einem der Ansprüche 1 bis 4, **dadurch gekennzeichnet,** daß sich die Längsstäbe (14) insgesamt oder teilweise entlang der Rohrschlange (2) erstrecken.
